(19) Europäisches Patentamt

European Patent Office

Office européen des brevets

(11) Veröffentlichungsnummer : **0 212 088 B1**

# (12) EUROPÄISCHE PATENTSCHRIFT

(45) Veröffentlichungstag der Patentschrift :
**23.01.91 Patentblatt 91/04**

(21) Anmeldenummer : **86107177.7**

(22) Anmeldetag : **27.05.86**

(51) Int. Cl.⁵ : **C02F 11/00, B01D 17/00**

(54) **Verfahren zur Beseitigung der Umweltschmutzwirkung von Kühlschmierflüssigkeiten und Ölemulsionen.**

(30) Priorität : **29.08.85 HU 325585**

(43) Veröffentlichungstag der Anmeldung :
**04.03.87 Patentblatt 87/10**

(45) Bekanntmachung des Hinweises auf die
Patenterteilung :
**23.01.91 Patentblatt 91/04**

(84) Benannte Vertragsstaaten :
**AT BE CH DE FR GB IT LI LU NL SE**

(56) Entgegenhaltungen :
**EP-A- 0 056 090**
**DE-A- 2 507 733**
**DE-A- 2 807 495**
**DE-A- 3 212 120**
**US-A- 4 332 693**
**US-A- 4 388 195**
**US-A- 4 415 467**

(73) Patentinhaber : **TIP-TOP Szolgáltat**
**Kisszövetketzet**
**Bécsi ut 225**
**Budapest-Ungarn 1032 (HU)**

(72) Erfinder : **Gábor, Török, Dipl.-Ing.**
**Egry J. u. 40**
**H-1111 Budapest (HU)**
Erfinder : **Gábor, Török, Jr.**
**Juhasz u. 28**
**H-1039 Budapest (HU)**

(74) Vertreter : **Hoffmann, Klaus, Dr. rer. nat. et al**
**Hoffmann . Eitle & Partner Patentanwälte**
**Postfach 81 04 20 Arabellastrasse 4**
**D-8000 München 81 (DE)**

## Beschreibung

Die Erfindung bezieht sich auf ein Verfahren zum Abtrennen von Kühlschmierflüssigkeiten und Ölemulsionen mittels Chemikalienbehandlung und Zusatzstoffmischung und zur Beseitigung der umweltverschmutzenden Wirkung des entstehenden Schlammes ohne Entstehung von Flüssigkeit.

Es ist bekannt, dass die in der Metallbearbeitung verwendeten Kühlschmierflüssigkeiten und Ölemulsionen nach dem Verlieren ihrer vorteilhaften Eigenschaften, d.h. nach ihrer Erschöpfung, aufgrund ihres hohen Öl- und organischen Lösemittelgehaltes ausserordentlich gefährlich für die Umgebung, insbesondere für die Flora und Fauna, sind.

Zur Beseitigung der umweltverschmutzenden Wirkung sind mehrere Verfahren bekannt.

Bei einem der bekanntesten Verfahren wird niederschlagbildendes Ferrosalz und eine notwendige Menge an schwacher Lauge der erschöpften Flüssigkeit zugemischt, wodurch der pH-Wert der Flüssigkeit eingestellt wird. Der aus dem Ferrosalz entstehende Einsenhydroxyd -Niederschlag bindet das Öl und den grossen Teil des Lösemittels ab. Das Einsenhydroxyd wird durch Absetzen und/oder Filtration vom Wasser abgetrennt.

Der Nachteil dieses Verfahrens besteht darin, dass die Behandlung zeitanspruchsvoll ist und nur für das Entölen von Flüssigkeiten geringer Konzentration (2 bis 3%) verwendet werden kann, und dass dabei ein für die Umwelt schadhafter öliger Schlamm entsteht.

Nach einem anderen bekannten Verfahren wird die erschöpfte Flüssigkeit mittels Zugabe von konzentrierter Säure in die Phasen Öl-Lösemittel-Wasser getrennt, das ausgelöste Öl wird auf die Wasserfläche aufgeschwemmt und dort gesammelt. Zu der Phase Lösemittel-Wasser wird danach ein niederschlagerzeugender Stoff (z.B. Ferrosulfat oder Aluminiumsulfat) und die zum Einstellen des pH-Wertes notwendige Lauge zugegeben. Die aus dem niederschlagerzeugenden Stoff entstehenden Metallhydroxyde binden anhand ihrer flächenaktiven Eigenschaften den grossen Teil des Öls und des Lösemittels an ihren Oberflächen ab. Der entstandene Niederschlag wird durch Absetzen und/oder Filtration vom Wasser abgelöst.

Der Nachteil dieses Verfahrens besteht darin, dass die Säurebehandlung 12 bis 24 Stunden beansprucht, also sehr zeitanspruchsvoll ist, und nur zum Entölen von Flüssigkeiten mittlerer Konzentration (2 bis 5%) verwendbar ist, und schliesslich entsteht dabei ein für die Umwelt schadhafter öliger Schlamm.

Bei einem weiteren bekannten Verfahren werden flächenaktive Feststoffe, zweckmässig Kieselerde, verschiedene Tonsorten oder Bentonit, weiterhin alkalisierende Stoffe, zweckmässig Kalkhydrat oder Trinatriumphosphat, weiterhin niederschlagerzeugende Stoffe, zweckmässig Ferrosulfat oder Aluminiumsulfat, der erschöpften Flüssigkeit zugegeben. Die erschöpfte Flüssigkeit und die zugegebenen Chemikalien und Stoffe werden stark verrührt, dabei werden die flächenaktiven Stoffe das Öl und den grossen Teil der Lösemittel an ihren Oberflächen abbinden. Der Niederschlag und das Wasser werden durch Absetzen und/oder Filtration getrennt, wobei relativ reine Flüssigkeit und ein für die Umwelt schadhafter Schlamm entstehen.

Der Nachteil dieses Verfahrens besteht im Entstehen des für die Umwelt schadhaften Schlammes und in der Kostspieligkeit der Behandlung.

Laut einem weiteren bekannten Verfahren werden der erschöpften Flüssigkeit Zement, niederschlagerzeugendes Metallsalz und anionischer Polyelektrolyt zugegeben, die derart entstandene Gemisch wird stark verrührt, bis für die Umwelt nicht mehr gefährlicher Schlamm und relativ reines Wasser entstehen.

Der Nachteil dieses Verfahrens besteht darin, dass in dem gereinigtem Wasser nach der Behandlung eine bedeutende Menge von in ausserordentlichem Masse stabilisierenden organischem Lösemittel bleibt, so daß das gereinigte Wasser eine für die Umwelt ziemlich schadhafte Wirtung ausübt.

DE-A-25 07 733 betrifft ein Verfahren zur Reinigung von Abwässern, das emulgierte Öle enthalten kann, bei dem man ein Mittel verwendet, das sich aus einer Mischung von Kaolin, Aluminiumsulfat und weiteren Wasserreinigungszusatzstoffen zusammensetzt und gegebenenfalls Polyelektrolyte enthält, wobei auch ein Teil des Aluminiumsulfats durch Eisen-III-Sulfat und 0-50% des Kaolins durch Betonit und/oder Kieselgur und/oder Perlite und/oder Kieselerde und/oder Kalkmehl ersetzt sei kann.

EP-A-0 056 090 bezieht sich auf ein Verfahren, bei dem hinsichtlich des Ölgehalts schwierig zu behandelnden Flüssigkeiten mit organischen Flockungsmitteln und Metallsalz-Flokulanten ersetzt werden.

Die Zielsetzung des erfindungsgemässen Verfahrens ist eine Behandlung der in der Metallbearbeitung verwendeten, bereits erschöpften Flüssigkeiten mittels Chemikalien und Zusatzstoffen, wobei die Kühlschmierflüssigkeit und die Ölemulsionen getrennt und für die Umwelt nicht mehr gefährlicher Schlamm und Verdünnungswasser von für die nächste Behandlung verwendbarer Menge und Qualität hergestellt werden.

Die oben gesetzte Aufgabe wird durch ein Verfahren zur Behandlung von umweltverschmutzenden, erschöpften Kühlschmierflüssigkeiten und Ölemulsionen unter Einsatz von Zement oder anderen flächenaktiven Stoffen, zweckmässigerweise Bentonit, alkalisierenden Stoffen, organischen Flockungsmitteln und Verdünnungswasser, weiterhin Niederschlag erzeugenden Metallsalzen, zweckmässigerweise Aluminiumsulfat, gelöst, das dadurch gekennzeichnet ist, daß der erschöpften Kühlschmierflüssigkeit und-/oder Ölemulsion während fortlaufendem Rühren öliger Schlamm, der beim Waschen von Kraftfahrzeugen angefallen ist, und die oben genannten Zuschlagsstoffe während fortlaufendem Rühren zugegeben werden, die entstandene Mischung entwässert und das abgetrennte Wasser bei der nächsten Behandlung als Verdünnungswasser verwendet werden.

Die Durchführung des erfindungsgemässen Verfahrens wird mit den folgenden Beispielen erläutert.

## Beispiel 1.

Es werden 900 kg erschöpfte Flüssigkeit, 500 kg von dem Waschen von Kraftfahrzeugen entstandener öliger Schlamm, 2100 kg Verdünnungswasser, 78 kg Zement, 92 kg Aluminiumsulfat und 0,3 kg organischer Flockulant in einen Behälter oder Becken entsprechenden Raumgehaltes gegeben.

Das Gemisch wird ca. 45 Minuten lang intensiv verrührt, dann auf einfachem mechanischem Wege, beispielsweise mittels Filtertuch, getrennt.

Als Resultat der Behandlung entstehen 1570 kg für die Umwelt nicht mehr schadhafter öliger Schlamm und genau 2100 kg gering verschmutztes Wasser. Dieses Wasser wird als Verdünnungswasser bei der Behandlung der nächsten Menge verwendet.

## Beispiel 2.

Die Behandlung wird laut Beispiel 1. durchgeführt, mit dem Unterschied, dass anstatt 78 kg Zement 75 kg Bentonit oder Kieselerde und ca. 5 kg Trinatriumphosphat zugegeben werden.

Das Resultat stimmt mit dem Ergebnis laut Beispiel 1. überein.

Ein ausserordentlicher Vorteil des erfindungsgemässen Verfahrens besteht darin, dass dabei zugleich zwei für die Umwelt gefährliche Abfälle (öliger Schlamm und Emulsion) in für die Umwelt nicht schadhaften Stoff umgeändert werden.

Der derart entstandene Schlamm kann desweiteren bei der Zucht von in der Nahrungskette nicht enthaltenen Pflanzen als Bodenmeliorationsstoff, für die Intensifikation von Biogas, mit kommunalem Abfall gemischt als Kompoststoff, beim Bauen von Asphaltstrassen als Zusatz stoff, oder in der Ziegelindustrie als Hilfsenergiestoff verwendet werden.

Ein weiterer Vorteil des erfindungsgemässen Verfahrens besteht darin, dass dabei kein Wasser entsteht.

## Ansprüche

1. Verfahren zur Behandlung von umweltverschmutzenden, erschöpften Kühlschmierflüssigkeiten und Ölemulsionen unter Einsatz von Zement oder anderen flächenaktiven Stoffen, zweckmässigerweise Bentonit, alkalisierenden Stoffen, organischen Flockungsmitteln und Verdünnungswasser, weiterhin Niederschlag erzeugenden Metallsalzen, zweckmässigerweise Aluminiumsulfat, **dadurch gekennzeichnet,** daß der erschöpften Kühlschmierflüssigkeit und/oder Ölemulsion während fortlaufendem Rühren öliger Schlamm, der beim Waschen vom Kraftfahrzeugen angefallen ist, und die oben genannten zuschlagstoffe während fortlaufendem Rühren zugegeben werden, die entstandene Mischung entwässert und das abgetrennte Wasser bei der nächsten Behandlung als Verdünnungswasser verwendet werden.

2. Verfahren nach Anspruch 1, **dadurch gekennzeichnet,** daß als flächenaktiver Stoff Kieselerde oder andere Tonsorten dem Gemisch zugegeben werden.

3. Verfahren nach Anspruch 1, **dadurch gekennzeichnet,** daß die Alkalität des Gemisches durch Kalkhydrat eingestellt wird.

## Claims

1. Device for the treatment of environmentally damaging spent cooling lubricants and oil emulsions with use of cement or other surface active materials, expediently bentonite, alkalising materials, organic flocculators and a diluting agent, in addition to precipitation-inducing metallic salts, expediently aluminium sulphate, characterized in that with continuous stirring oily sludge, obtained from washing motor vehicles, and with continuous stirring the above-mentioned substances are added to the spent cooling grease and/or oil emulsion, the resulting mixture is dewatered and the separated water is used as the diluting agent for the next treatment.

2. Device according to claim 1, characterized in that siliceous earth or other types of clay are added to the mixture as surface active materials.

3. Device according to claim 1, characterized in that the alkalinity of the mixture is regulated by hydrated lime.

## Revendications

1. Procédé de traitement de liquides lubrifiants de refroidissement et d'émulsions d'huiles usés et polluants pour l'environnement, avec mise en oeuvre de ciment ou d'autres matières tensioactives, représentées avantageusement par la bentonite, de matières alcalinisantes, d'agents de floculation organiques, et d'eau de dilution, ainsi que de sels métalliques provoquant la précipitation, avantageusement du sulfate d'alumine, caractérisé par le fait que le liquide lubrifiant de refroidissement et/ou l'émulsion d'huile usé est additionné, en étant sous agitation permanente, de la boue huileuse qui provient du lavage des véhicules automobiles, et que les produits additifs cités plus haut sont ajoutés, sous agitation permanente, que le mélange obtenu est débarassé de son eau et que l'eau ainsi séparée est utilisée lors du traitement suivant, en tant qu'eau de dilution.

2. Procédé selon la revendication 1 caractérisé par le fait que l'on ajoute au mélange, en tant que matière tensio-active, de la silice ou d'autres sortes d'argile.

3. Procédé selon la revendication 1 caractérisé par le fait que l'alcalinité du mélange est réglée au moyen d'hydrate de chaux.